# EUROPÄISCHE PATENTSCHRIFT

(11) **EP 4 353 947 B1**
(45) Veröffentlichungstag und Bekanntmachung des Hinweises auf die Patenterteilung: **13.08.2025**
(21) Anmeldenummer: 23202630.2
(22) Anmeldetag: 10.10.2023
(51) Int. Cl.: F01D 5/00, F01D 25/28, F01D 21/00, B23P 6/04, G02B 23/24

(54) **SYSTEM ZUR IN-SITU-OBERFLÄCHENBEARBEITUNG EINER TRIEBWERKSSCHAUFEL**
SYSTEM FOR IN-SITU SURFACE MACHINING OF AN ENGINE BLADE
SYSTÈME D'USINAGE DE SURFACE IN SITU D'UNE AUBE DE MOTEUR

(30) Priorität: 13.10.2022 DE 202022105802 U
(43) Veröffentlichungstag der Anmeldung: 17.04.2024
(73) Patentinhaber: Richard Wolf GmbH, 75438 Knittlingen (DE)
(72) Erfinder: Schwab, Daniel, 75438 Knittlingen-Freudenstein (DE); Halman, Oktay, 80995 München (DE)
(74) Vertreter: Patentanwälte Hemmer Lindfeld Frese Partnerschaft mbB

(56) Entgegenhaltungen:
- WO-A2-2015/048700
- DE-B4- 102015 205 601
- DE-C1- 4 241 767
- US-A- 5 475 485
- US-A1- 2005 107 001
- US-A1- 2017 239 762
- US-B2- 9 699 417

## Beschreibung

Die vorliegende Erfindung betrifft ein System zu In-Situ-Oberflächenbearbeitung einer Triebwerkschaufel innerhalb eines sich entlang einer Fluidhauptströmungsrichtung von einer Fluideintrittsseite zu einer Fluidaustrittsseite hin erstreckenden Flugzeugtriebwerks, wobei das System ein endoskopisches Bearbeitungsinstrument mit einem abwinkelbaren rohrförmigen Schaft aufweist, wobei das Bearbeitungsinstrument dazu eingerichtet ist, in einer nicht-abgewinkelten Ausgangskonfiguration im Wesentlichen radial durch mindestens eine laterale Zugangsöffnung in das Flugzeugtriebwerk eingeschoben zu werden. Weiterhein betrifft die vorliegende Erfindung die Verwendung eines solchen Systems zur Oberflächenbearbeitung einer Triebwerksschaufel.

Moderne Flugzeugtriebwerke verfügen über mehrere Verdichter- und Turbinenstufen. Jede der Verdichter- und Turbinenstufen umfasst eine Mehrzahl von Triebwerksschaufeln, die drehbar in dem Triebwerk angeordnet sind. Die Triebwerksschaufeln werden auch als Laufschaufeln bezeichnet. Während des Betriebs kann es zu geringfügigen Beschädigungen und Rissen an den Eintrittskanten und Austrittskanten, die zusammen auch als Anströmkanten bezeichnet werden, der Triebwerksschaufeln kommen.

Um derartige Schäden beheben zu können, ohne die gesamte Triebwerksverkleidung demontieren zu müssen, ist es bekannt, endoskopische Systeme zu verwenden und durch in der Triebwerksverkleidung vorgesehene laterale Zugangsöffnungen in das Flugzeugtriebwerk einzuschieben. Am Kopf der endoskopischen Bearbeitungsvorrichtungen bzw. Bearbeitungsinstrumente können verschiedene Werkzeuge eingesetzt werden, mit denen die Schäden zunächst verblendet und anschließend poliert werden.

Um die Triebwerksschaufeln aller Verdichter- und Turbinenstufen bearbeiten zu können, weisen die Triebwerksverkleidungen für jede Verdichter- und Turbinenstufe mindestens eine Zugangsöffnung auf, die in Strömungsrichtung vor, das heißt stromaufwärts, von der jeweiligen Verdichter- oder Turbinenstufe und damit den zu reparierenden Triebwerksschaufeln angeordnet ist. Die laterale Zugangsöffnung ist somit zwischen der Fluideintrittsseite des Flugzeugtriebwerks und der jeweils zu reparierenden Triebwerksschaufel angeordnet.

Aufgrund der zunehmend komplexen Geometrie der Laufschaufeln von Flugzeugturbinen können die Eintrittskanten und insbesondere die Austrittskanten der Laufschaufeln jedoch auf diese Weise nicht mehr zuverlässig oder gar nicht mehr erreicht werden. Dies erschwert die Reparatur der entsprechenden Bereiche der Laufschaufeln mit den bekannten Methoden.

DE 10 2015 025 601 B4 offenbart ein Technoskop, mit dem Reparaturen an Triebwerksschaufeln vorgenommen werden können. Das Technoskop verfügt über einen Schaft mit einer Werkzeugaufnahme, die gegenüber dem Schaft abgewinkelt werden kann. Daneben verfügt die Vorrichtung noch über ein Okular. WO 2015/048700 A2 offenbart ebenfalls ein Technoskop zur Reparatur von Triebwerksschaufeln. Das Technoskop verfügt über einen Schaft mit einem abwinkelbaren distalen Schaftabschnitt, der über eine Werkzeugaufnahme verfügt. In dem distalen Schaftabschnitt ist ein Elektromotor angeordnet, der ein in die Werkzeugaufnahme eingesetztes Werkzeug antreibt. US 2005/0107001 A1 offenbart ein Technoskop zur Reparatur von Triebwerksschaufeln. Das Technoskop verfügt über einen Schaft mit einem distalen Schaftabschnitt, der gegenüber dem Hauptschaft abgewinkelt werden kann. US 5,475,485 zeigt ein Technoskop zur Bearbeitung von Triebwerksschaufeln. Das Technoskop verfügt über einen proximalen Schaft mit einem abwinkelbaren distalen Schaftabschnitt, an dessen distalen Ende eine Werkzeugaufnahme vorgesehen ist. US 9,699,417 offenbart ebenfalls ein Technoskop zur Bearbeitung von Triebwerksschaufeln. Das Technoskop verfügt über eine Beobachtungseinheit, mit der Bilder vom Inneren eines Triebwerks aufgenommen werden können. Auch US 2017/0239762 A1 offenbart ein Technoskop zur Bearbeitung von Triebwerksschaufeln im Inneren eines Triebwerks.

Vor diesem Hintergrund stellt sich dem Fachmann die Aufgabe, ein verbessertes System zur In-Situ-Oberflächenbearbeitung einer Triebwerksschaufel anzugeben.

Das der Erfindung zugrundeliegende Problem wird gelöst durch ein System gemäß Anspruch 1 sowie eine Verwendung eines solchen System gemäß Anspruch 13. Bevorzugte Ausgestaltungen des Systems und der Verwendung sind in den abhängigen Ansprüchen angegeben.

Zur Lösung der Aufgabe wird gemäß einem ersten Aspekt ein System zur In-Situ-Oberflächenbearbeitung einer Triebwerksschaufel innerhalb eines sich entlang einer Fluidhauptströmungsrichtung von einer Fluideintrittsseite zur einer Fluidaustrittsseite hin erstreckenden Flugzeugtriebwerks vorgeschlagen. Das System weist ein endoskopisches Bearbeitungsinstrument mit einem abwinkelbaren rohrförmigen Schaft auf. Das Bearbeitungsinstrument ist dazu eingerichtet, in einer nicht-abgewinkelten Ausgangskonfiguration im Wesentlichen radial durch mindestens eine laterale Zugangsöffnung in das Flugzeugtriebwerk eingeschoben zu werden. Die laterale Zugangsöffnung ist stromabwärts von der Triebwerksschaufel angeordnet. Das Bearbeitungsinstrument weist in einem distalen Ende des Schafts eine drehbar angetriebene Werkzeugaufnahme für einen Werkzeugkopf zur Oberflächenbearbeitung auf und ist dazu ausgestaltet, in einer abgewinkelten Arbeitskonfiguration einen in die Werkzeugaufnahme eingesetzten Werkzeugkopf an einer Anströmkante der Triebwerksschaufel anzusetzen.

Mit anderen Worten ist ein System vorgesehen, mit dem die Oberfläche von Triebwerksschaufeln und insbesondere die Eintrittskanten und Austrittskanten derselben in einer Turbine bearbeitet werden können, ohne dass hierzu die Turbine demontiert werden muss, also beispielsweise die Verkleidung des Triebwerks entfernt werden muss. Das System umfasst ein endoskopisches Bearbeitungsinstrument mit einem rohrförmigen Schaft, der abgewinkelt werden kann. Unter Abwinkeln wird vorliegend verstanden, dass unterschiedliche Abschnitte des Schaftes unter zumindest zwei verschiedenen Winkeln relativ zueinander angeordnet werden können.

In einem ersten, nicht-abgewinkelten Zustand, der als Ausgangskonfiguration bezeichnet wird, kann das Bearbeitungsinstrument durch eine Zugangsöffnung in das Flugzeugtriebwerk eingeschoben werden. Diese Zugangsöffnung kann beispielsweise seitlich in der Verkleidung des Triebwerks ausgebildet sein. Das Bearbeitungsinstrument wird dabei zumindest teilweise durch die Zugangsöffnung hindurch in den Innenraum des Triebwerks eingeschoben bzw. eingebracht, was im Wesentlichen einer radialen Bewegung auf eine zentrale Achse des Triebwerks zu entspricht.

Das Bearbeitungsinstrument ist dabei so ausgestaltet, dass es zur Bearbeitung einer Triebwerksschaufel nicht durch eine in Hauptströmungsrichtung stromaufwärts von der zu bearbeitenden Triebwerksschaufel gelegene Zugangsöffnung eingeschoben wird, sondern durch eine Zugangsöffnung, die auf der in Strömungsrichtung abgewandten Seite der Triebwerksschaufel liegt. Die Triebwerksschaufel ist somit zwischen der Zugangsöffnung und der Fluideintrittsseite des Flugzeugtriebwerks angeordnet.

Das Bearbeitungsinstrument weist weiter an seinem distalen oder freien Ende des Schafts eine Werkzeugaufnahme auf, in die ein Werkzeugkopf zur Oberflächenbearbeitung eingesetzt werden kann. Die Werkzeugaufnahme und damit auch der Werkzeugkopf sind drehbar angetrieben, wobei bevorzugte Ausgestaltungen des Antriebs im Rahmen bevorzugter Ausführungsformen beschrieben werden.

Das Bearbeitungsinstrument ist insgesamt dazu konfiguriert, in der Arbeitskonfiguration, in der der Schaft gegenüber der Ausgangskonfiguration abgewinkelt ist, mit einem in die Werkzeugaufnahme eingesetzten Werkzeugkopf beispielsweise an einer Eintrittskante oder Austrittskante einer Triebwerksschaufel anzusetzen und diese zu bearbeiten.

Das System ermöglicht damit die Oberflächenbearbeitung von Triebwerksschaufeln mit komplexen Geometrien, die durch konventionell auf der in Strömungsrichtung vor der Triebwerksschaufel gelegenen Bearbeitungsinstrumenten nicht erreicht bzw. nicht vollständig erreicht werden können. Dabei werden solche Zugangsöffnungen verwendet, die eigentlich für in Strömungsrichtung abwärts von der zu bearbeitenden Triebwerksschaufel gelegene Verdichter- und Turbinenstufen vorgesehen sind. Der Abstand der Zugangsöffnungen zu den jeweiligen Triebwerksschaufeln kann dabei in Strömungsrichtung mehrere Zentimeter betragen, beispielsweise 7 cm groß sein. Dieser Abstand kann durch das entsprechend ausgestaltete Bearbeitungsinstrument, das Teil des vorliegenden Systems ist, überwunden werden, so dass auch eine Bearbeitung von Oberflächen möglich ist, die bei der Verwendung von konventionellen Werkzeugen zu weit von der Zugangsöffnung beabstandet sind.

In einer bevorzugten Ausführungsform ist ein Beobachtungsinstrument in das Bearbeitungsinstrument integriert. Ein solches Beobachtungsinstrument kann beispielsweise durch eine Spiegelanordnung realisiert sein, die einem Nutzer bzw. Verwender des Systems ermöglicht, durch die Zugangsöffnung in das Innere des Triebwerks zu blicken, durch die das Bearbeitungsinstrument eingeschoben wird.

In einer alternativen beispielhaften Ausführungsform umfasst das System ein von dem Bearbeitungsinstrument separates endoskopisches Beobachtungsinstrument. Das Beobachtungsinstrument ist dazu eingerichtet, im Wesentlichen radial durch eine andere laterale Zugangsöffnung des Flugzeugtriebwerks eingeschoben zu werden, wobei die andere laterale Zugangsöffnung stromaufwärts von der Triebwerksschaufel angeordnet ist. In der bevorzugten Ausführungsform kann somit beispielsweise die Zugangsöffnung, die eigentlich zur Bearbeitung der Triebwerksschaufel vorgesehen ist und die zwischen der Triebwerksschaufel und der Fluideintrittsseite des Flugzeugtriebwerks liegt, zum Einschieben eines endoskopischen Beobachtungsinstruments verwendet werden. Durch diese Zugangsöffnung kann dann eine Triebwerksschaufel untersucht bzw. beobachtet werden, während sie mittels des durch die in Strömungsrichtung nachfolgende Zugangsöffnung eingeschobenen Werkzeugs bearbeitet wird.

Weiterhin weist der Schaft des Bearbeitungsinstruments einen proximalen ersten Schaftabschnitt und einen distalen zweiten Schaftabschnitt auf. Der zweite Schaftabschnitt wird zum Wechsel von der Ausgangskonfiguration in die Arbeitskonfiguration gegenüber dem ersten Schaftabschnitt abgewinkelt. Ein in die Werkzeugaufnahme eingesetzter Werkzeugkopf erstreckt sich aus einem freien distalen Ende des zweiten Schaftabschnitts. Innerhalb des zweiten Schaftabschnitts ist eine Antriebswelle für die Werkzeugaufnahme drehbar gelagert. Mit der Antriebswelle kann ein in die Werkzeugaufnahme eingesetzter Werkzeugkopf angetrieben werden.

Das Bearbeitungsinstrument weist somit einen Schaft auf, der zumindest einen ersten Schaftabschnitt und eine zweiten Schaftabschnitt aufweist. Der erste oder proximale Schaftabschnitt ist einem Bediener des Bearbeitungsinstruments näher, als der zweite oder distale Schaftabschnitt, der weiter von einem Bediener beabstandet angeordnet ist. Um das Bearbeitungsinstrument von der Ausgangskonfiguration, in der es durch die Zugangsöffnung in das Triebwerk eingeführt wird, in die Arbeitskonfiguration zu bringen, in der die Triebwerksschaufeln bearbeitet werden können, wird der zweite Schaftabschnitt relativ zu dem ersten Schaftabschnitt abgewinkelt. In der Ausgangskonfiguration ist der zweite Schaftabschnitt vorzugsweise in Verlängerung des ersten Schaftabschnitts angeordnet. Die Werkzeugaufnahme ist Teil des zweiten Schaftabschnitts und so in diesem angeordnet, dass ein in die Werkzeugaufnahme eingesetzter Werkzeugkopf aus einem freien Ende des zweiten Schaftabschnitts herausragt.

Um mit dem Werkzeugkopf die Oberfläche der Triebwerksschaufeln zu bearbeiten, muss dieser sich drehen. Zum Antrieb bzw. Drehen der Werkzeugaufnahme ist daher eine Antriebswelle vorgesehen, die drehbar innerhalb des zweiten Schaftabschnitts gelagert oder angeordnet ist. Beispielsweise kann eine Antriebswelle drehbar innerhalb eines Schaftabschnitts angeordnet sein, in dem diese teilweise oder vollständig von einer Hülse oder einem Rohr umgeben ist. Es gibt somit einen nicht mitdrehenden Teil des zweiten Schaftabschnitts, der die Antriebswelle zumindest teilweises oder vorzugsweise vollständig umschließt und damit verhindert, dass durch die drehende Antriebswelle an unbeabsichtigter Stelle Beschädigungen innerhalb des Triebwerks auftreten, wenn der zweite Schaftabschnitt außerhalb des Werkzeugkopfes bei drehender Antriebswelle mit der Triebwerksschaufel oder einer anderen Komponente des Triebwerks in Berührung kommen sollte.

Vorzugsweise weist der zweite Schaftabschnitt eine Länge auf, die mindestens fünfmal so groß ist wie ein Außendurchmesser des ersten Schaftabschnitts.

Um die Antriebswelle anzutreiben, ist vorzugsweise ein entlang des ersten Schaftabschnitts verlaufende Antriebsriemen vorgesehen, der in der Arbeitskonfiguration um eine als Riemenführungsrolle dienendes proximales Ende der Antriebswelle verläuft. Die in dem zweiten Schaftabschnitt angeordnete Antriebswelle wird somit vorzugsweise mittels eines Riemenantriebs in Drehung versetzt. Der Antriebsriemen kann wiederrum beispielsweise durch einen Motor angetrieben werden, der in einem beispielhaft vorgesehenen Handgriff bzw. einer manuell zu haltenden Handhabungseinrichtung angeordnet ist. Der Riemenantrieb ist so ausgestaltet, dass er zumindest dann, wenn das Bearbeitungsinstrument in der Arbeitskonfiguration ist, also wenn der zweite Schaftabschnitt relativ zu dem ersten Schaftabschnitt abgewinkelt ist, um eine Riemenführungsrolle läuft, die das proximale Ende der Antriebswelle bildet. Mithin bildet das dem ersten Schaftabschnitt bzw. einem Bediener zugewandte Ende der Arbeitswelle in der bevorzugten Ausführungsform als Riemenführungsrolle und ist damit Teil des Riemenantriebs, mit dem die Antriebswelle und damit ein in die Werkzeugaufnahme eingesetzter Werkzeugkopf angetrieben wird.

Es ist weiter bevorzugt, wenn der Antriebsriemen durch Abwinkeln des zweiten Schaftabschnitts gegenüber dem ersten Schaftabschnitt von der Ausgangskonfiguration in die Arbeitskonfiguration gespannt wird. Es ist somit vorgesehen, dass nachdem das Bearbeitungsinstrument durch die Zugangsöffnung in beispielsweise eine Triebwerksgondel eingeführt wurde, das Bearbeitungsinstrument von der Ausgangskonfiguration in die Arbeitskonfiguration umgewandelt wird. Dazu wird, wie bereits erläutert, der zweite Schaftabschnitt relativ zum ersten Schaftabschnitt verkippt, so dass er relativ zu diesem abgewinkelt ist. Beim Abkippen bzw. Abwinkeln des zweiten Schaftabschnitts wird entsprechend der bevorzugten Ausführungsform der Antrieb, der um die am proximalen Ende der Antriebswelle ausgebildete Riemenführungsrolle geführt und dabei gespannt. So wird auf vorteilhafte Weise sichergestellt, dass die Antriebswelle nur dann rotierend angetrieben wird, wenn der zweite Schaftabschnitt in der Arbeitskonfiguration ist und auch tatsächlich eine Bearbeitung einer Oberfläche geplant ist.

In einer weiter bevorzugten Ausführungsform weist der zweite Schaftabschnitt zumindest einen Kupplungsabschnitt und einen Verlängerungsabschnitt auf. Der Kupplungsabschnitt schließt sich an den ersten Schaftabschnitt an. Der Verlängerungsabschnitt ist lösbar mit dem Kupplungsabschnitt verbunden. Der Verlängerungsabschnitt umfasst einen distalen Teil der Antriebswelle sowie eine Hülse, die den distalen Teil der Antriebswelle umgibt.

Mit anderen Worten ist vorzugsweise vorgesehen, dass der zweite Schaftabschnitt zumindest zwei Unterabschnitte aufweist, die als Kupplungsabschnitt und Verlängerungsabschnitt bezeichnet werden. Als Kupplungsabschnitt wird dabei der Teil des zweiten Schaftabschnitts bezeichnet, der sich unmittelbar an den ersten Schaftabschnitt anschließt. Teil dieses Abschnitts könnte beispielsweise der Teil der Antriebswelle sein, an dessen Ende die Riemenführungsrolle für den Antriebsriemen angeordnet ist, sofern das System über einen Antriebsriemen verfügt.

Der zweite Teil des zweiten Schaftabschnitts wird als Verlängerungsabschnitt bezeichnet, der lösbar mit dem Kupplungsabschnitt verbunden ist. Mit anderen Worten kann der zweite Abschnitt zumindest in zwei Teile zerlegt werden, dem Kupplungsabschnitt und den Verlängerungsabschnitt. Dabei ist der Kupplungsabschnitt beispielsweise fest aber abwinkelbar mit dem ersten Schaftabschnitt verbunden, während der Verlängerungsabschnitt über den Kupplungsabschnitt mit dem ersten Schaftabschnitt verbunden wird.

Der Verlängerungsabschnitt umfasst einen zweiten, distalen Teil der Antriebswelle und vorzugsweise auch die Werkzeugaufnahme. Der distale Teil der Antriebswelle ist in einer Hülse angeordnet, die die Antriebswelle umgibt und damit zum einen die Antriebswelle vor Beschädigungen schützt, zum anderen aber auch mögliche ungewollte Beschädigungen durch die sich drehende Antriebswelle verhindert. Schließlich kann auch die Werkzeugaufnahme Teil des Verlängerungsabschnitts sein.

Durch die Aufteilung des zweiten Schaftabschnitts in einen Kupplungsabschnitt und einen Verlängerungsabschnitt ist es auf vorteilhafte Weise möglich, unterschiedliche Verlängerungsabschnitte, insbesondere Verlängerungsabschnitte mit unterschiedlicher Länge zu verwenden. Damit kann das gleiche Bearbeitungsinstrument für unterschiedliche Abstände zwischen der Zugangsöffnung und den zu bearbeitenden Oberflächen verwendet werden. Hierzu muss lediglich der Verlängerungsabschnitt ausgetauscht werden. Ein vollständiger Austausch des gesamten Bearbeitungsinstruments ist hingegen nicht notwendig.

Es ist weiter bevorzugt, wenn der Kupplungsabschnitt eine außenliegende Kupplung zur drehfesten Verbindung des Kupplungsabschnitts mit der Hülse und eine innenliegende Kupplung zur drehfesten Verbindung des Kupplungsabschnitts mit dem distalen Teil der Antriebswelle aufweist. Die innenliegende Kupplung kann relativ zur außenliegenden Kupplung verdreht werden, um die Antriebswelle anzutreiben. Die Verbindung zwischen der außenliegenden Kupplung und der Hülse sowie der innenliegenden Kupplung und der Antriebswelle ist lösbar.

In der bevorzugten Ausgestaltung des Systems hat der Kupplungsabschnitt zwei Kupplungen, eine innenliegende Kupplung und eine außenliegende Kupplung. Beide Kupplungen sind dazu vorgesehen, drehfeste Verbindungen zwischen dem Kupplungsabschnitt und verschiedenen Komponenten bzw. Elementen des Verlängerungsabschnitts herzustellen. Eine Verbindung ist beispielsweise dann drehfest, wenn zwei drehfest miteinander verbundene Komponenten nicht gegeneinander verdreht werden können. Wenn also die Hülse des Verlängerungsabschnitts drehfest mit der außenliegenden Kupplung verbunden ist, dann kann die Hülse nicht relativ zur außenliegenden Kupplung verdreht werden. Entsprechend kann sich auch der distale Teil der Antriebswelle nicht relativ zur innenliegenden Kupplung verdrehen, wenn die innenliegende Kupplung und der distale Teil der Antriebswelle drehfest miteinander verbunden sind. Wird entsprechend die innenliegende Kupplung in Drehung versetzt, so dreht sich der distale Teil der Antriebwelle mit.

Es ist jedoch vorgesehen, dass sich die innenliegende Kupplung relativ zur außenliegenden Kupplung verdrehen kann. Die innenliegende Kupplung kann somit relativ zur außenliegenden Kupplung gedreht werden, um den distalen Teil der Antriebswelle anzutreiben. In diesem Sinne bildet die innenliegende Kupplung einen Teil der Antriebswelle, der auch als proximaler Teil der Antriebswelle bezeichnet werden könnte. Beispielsweise kann an einem proximalen Ende der innenliegenden Kupplung eine Riemenführungsrolle ausgebildet sein, wenn zum Antrieb der Antriebswelle ein entlang des ersten Schaftabschnitts bzw. innerhalb des ersten Schaftabschnitts verlaufender Antriebsriemen verwendet werden sollte.

Um zu gewährleisten, dass der Verlängerungsabschnitt von dem Kupplungsabschnitt gelöst werden kann, kann die Verbindung zwischen der außenliegenden Kupplung und der Hülle sowie der innenliegenden Kupplung und dem distalen Ende der Antriebswelle gelöst werden. So wird ein Wechsel des Verlängerungsabschnitts ermöglicht.

Um eine Verbindung zwischen dem Verlängerungsabschnitt und dem Kupplungsabschnitt herzustellen und wieder zu lösen, wird eine relative Orientierung zwischen der Hülse und dem distalen Teil der Antriebswelle temporär festgelegt. Wenn der Verlängerungsabschnitt mit dem Kupplungsabschnitt verbunden oder wieder von diesem getrennt werden soll, wird somit die relative Drehung zwischen der Hülse, die den distalen Teil der Antriebswelle umgibt, und der Antriebswelle unterbunden.

In einer bevorzugten Ausführungsform weisen die Hülse und der distale Teil der Antriebswelle jeweils eine Durchgangsbohrung auf, mit denen die relative Orientierung von Hülse und distalem Teil der Antriebswelle festgelegt werden kann, in dem diese mittels eines schlitzförmigen Werkzeugs relativ zueinander ausgerichtet werden. Das Vorsehen einer Durchgangsbohrung in Hülse und distalem Teil der Antriebswelle ermöglicht auf einfache Weise, die Hülse und die Antriebswelle relativ zueinander auszurichten und auch gegen relatives Verdrehen zueinander zu sichern, so dass der Verlängerungsabschnitt des zweiten Schaftabschnitts mit dem Kupplungsabschnitt verbunden werden kann. Beispielsweise können die beiden Abschnitte miteinander verschraubt werden, wenn die beiden Kupplungsabschnitte und die entsprechenden Gegenstücke an der Hülse und dem distalen Teil der Antriebswelle jeweils ein Gewinde aufweisen, wobei das stiftförmige Werkzeug in diesem Fall in einer bevorzugten beispielhaften Ausführungsform auch als Werkzeug dient, um den Verlängerungsabschnitt mit dem Kupplungsabschnitt zu verschrauben.

Der zweite Schaftabschnitt weist weiterhin einen proximalen ersten Unterabschnitt und einen distalen zweiten Unterabschnitt auf, wobei der zweite Unterabschnitt in einem festen Winkel gegenüber dem ersten Unterabschnitt verläuft. Ein zweiter Schaftabschnitt kann sowohl einen Kupplungsabschnitt, einen Verlängerungsabschnitt und zwei Unterabschnitte aufweisen. Es ist aber auch denkbar, dass der zweite Schaftabschnitt nur einen ersten und zweiten Unterabschnitt aufweist. So ist in jedem Falle vorgesehen, dass der zweite Unterabschnitt des zweiten Schaftabschnitts relativ zum ersten Unterabschnitt um einen festen Winkel geneigt ist. Mit anderen Worten ist der zweite Schaftabschnitt nicht gerade, sondern weist einen Knick auf. Dies kann insbesondere dann vorteilhaft sein, wenn andernfalls schwierig zu erreichende Oberflächen einer Triebwerksschaufel bearbeitet werden sollen.

Es ist dabei bevorzugt, wenn der zweite Unterabschnitt gegenüber dem ersten Unterabschnitt entgegengesetzt abgewinkelt zu der Richtung verläuft, in welcher der zweite Schaftabschnitt gegenüber dem ersten Schaftabschnitt abwinkelbar ist. Mit anderen Worten ist der zweite Unterabschnitt in Richtung auf eine Erstreckungsrichtung des ersten Schaftabschnitts hin gegenüber dem zweiten Schaftabschnitt abgewinkelt.

Es ist weiter bevorzugt, wenn sich die Antriebswelle biegbar und/oder gelenkig vom ersten Unterabschnitt in den zweiten Unterabschnitt erstreckt. Hierzu kann die Antriebswelle mindestens ein rohrförmiges Übertragungselement aufweisen. Das mindestens eine rohrförmige Übertragungselement ist zumindest in einem Abschnitt geschlitzt ausgestaltet. Die Schlitze ermöglichen dabei, dass das die Antriebswelle bildende rohrförmige Übertragungselement gebogen werden kann und sich so vom ersten in den zweiten Unterabschnitt erstrecken kann, ohne dass es eines weiteren Gelenks bedarf oder einer anderen Form der Kupplung, die eine Kraftübertragung von dem Abschnitt der Antriebswelle, die sich dem ersten Unterabschnitt erstreckt, zu dem Abschnitt der Antriebswelle, der sich im zweiten Unterabschnitt erstreckt.

Es ist weiter bevorzugt, wenn die Antriebswelle mindestens zwei ineinander gesteckte rohrförmige Übertragungselemente aufweist, wobei jedes der Übertragungselemente zumindest in einem überlappenden Abschnitt geschlitzt ausgestaltet ist. In dem zwei ineinander gesteckte rohrförmige Übertragungselemente für die Antriebswelle im Bereich des Übergangs zwischen dem ersten und zweiten Unterabschnitt verwendet werden, die in einem überlappenden Abschnitt geschlitzt ausgestaltet sind, kann das Drehmoment der Antriebswelle besonders zuverlässig vom ersten Unterabschnitt in den zweiten Unterabschnitt übertragen werden. Insbesondere treten dabei nur geringe Drehmomentverluste auf.

Dabei ist es besonders bevorzugt, wenn das mindestens eine rohrförmige Übertragungselement in dem zumindest einen Abschnitt mittels eines mäandernd spiralförmig mehrfach umlaufenden Laserschlitzes geschlitzt ist. Durch die bevorzugte mittels eines Laserschlitz wird das Drehmoment mit besonders geringen Verlusten übertragen.

In einer besonders bevorzugten Ausführungsform bilden der erste Unterabschnitt und der zweite Unterabschnitt zusammen den Verlängerungsabschnitt. Mithin ist der Teil der Antriebswelle, der sich durch den ersten Unterabschnitt und den zweiten Unterabschnitt erstreckt, der distale Teil der Antriebswelle und der erste Unterabschnitt und der zweite Unterabschnitt sind lösbar mit dem Kupplungsabschnitt verbunden. Dies hat insbesondere den Vorteil, dass das gleiche Bearbeitungsinstrument für unterschiedlich gut zu erreichende Oberflächen einer Triebwerksschaufel verwendet werden kann, da nicht nur sich gerade erstreckende zweite Schaftabschnitte bzw. Verlängerungsabschnitte verwendet werden können, sondern ausdrücklich auch die Verwendung von Verlängerungsabschnitten vorgesehen ist, die abgeknickt bzw. geneigt sind.

In einer bevorzugten Ausführungsform des Systems weist das Bearbeitungsinstrument eine von einer Bedienperson manuell zu haltende Handhabungseinrichtung auf. Eine Antriebseinheit ist in der Handhabungseinrichtung integriert oder daran anschließbar. Der Schaft ist lösbar mit der Handhabungseinrichtung gekoppelt, kann aber auch unlösbar mit der Handhabungseinrichtung verbunden sein.

Schließlich ist zudem ein System vorgesehen, dass zusätzlich ein Set an unterschiedlichen Werkzeugköpfen aufweist, die wahlweise mit der Werkzeugaufnahme auswechselbar koppelbar sind. Mithin kann das System nicht nur einen Werkzeugkopf umfassen, sondern ein Set von Werkzeugköpfen. Beispielsweise kann ein Werkzeugkopf zum Schleifen verwendet werden, während ein zweiter Werkzeugkopf zum Polieren verwendet wird und ein dritter Werkzeugkopf zum Fräsen.

Gemäß einem zweiten Aspekt wird das der Erfindung zugrundeliegende Problem durch eine Verwendung eines Systems nach einer der vorhergehenden Ausführungsformen zur In-situ-Oberflächenbearbeitung einer Triebwerksschaufel innerhalb eines sich entlang einer Fluidhauptströmungsrichtung von einer Fluideintrittsseite zu einer Fluidaustrittsseite hin erstreckenden Flugzeugtriebwerks , wobei das Bearbeitungsinstrument in der nicht-abgewinkelten Ausgangskonfiguration im Wesentlichen radial durch mindestens eine laterale Zugangsöffnung in das Flugzeugtriebwerk eingeschoben wird, wobei die laterale Zugangsöffnung stromabwärts von der Triebwerksschaufel angeordnet ist, und nachfolgend in der abgewinkelten Arbeitskonfiguration des Bearbeitungsinstruments ein in die Werkzeugaufnahme eingesetzter Werkzeugkopf an eine Anströmkante der Triebwerksschaufel angesetzt wird.

Weiter bevorzugt ist, wenn bei der Verwendung des Systems der distale zweite Schaftabschnitt bei einem Übergang von der Ausgangskonfiguration in die Arbeitskonfiguration gegenüber dem proximalen ersten Schaftabschnitt abgewinkelt wird.

Die Vorteile der vorstehend beschriebenen Verwendung eines Systems zur In-situ-Oberflächenbehandlung einer Triebwerksschaufel entsprechen den Vorteilen der jeweils verwendeten Ausführungsform des Systems.

Nachfolgend werden bezugnehmend auf die Zeichnungen zwei Ausführungsbeispiele von Systemen zur In-Situ-Oberflächenbehandlung von Triebwerksschaufeln näher beschrieben. Dabei zeigt:
- Fig. 1: ein erstes Ausführungsbeispiel eines Systems zur In-Situ-Oberflächenbearbeitung einer Triebwerksschaufel,
- Fig. 2: eine Detailansicht des Ausführungsbeispiels aus Figur 1 in einer Ausgangskonfiguration,
- Fig. 3: eine Schnittansicht durch die Darstellung von Figur 2,
- Fig. 4: eine teilweise Darstellung des Ausführungsbeispiels aus Figur 1 in einer Arbeitskonfiguration,
- Fig. 5: eine Schnittansicht der Darstellung aus Figur 4,
- Fig. 6: eine perspektivische Ansicht eines Teils des Ausführungsbeispiels aus Figur 1 mit einem Ausführungsbeispiel eines stiftförmigen Werkzeugs,
- Fig. 7: eine schematische Ansicht eines Teils eines zweiten Ausführungsbeispiels eines Systems zur In-Situ-Oberflächenbearbeitung einer Triebwerksschaufel,
- Fig. 8: eine Schnittansicht der Darstellung aus Figur 7,
- Fig. 9: eine schematische Darstellung einer Oberfläche einer Antriebswelle, die im Ausführungsbeispiel in den Figuren 7 und 8 Verwendung findet,
- Fig. 10: eine schematische Darstellung eines Ausführungsbeispiels eines Flugzeugtriebwerks.

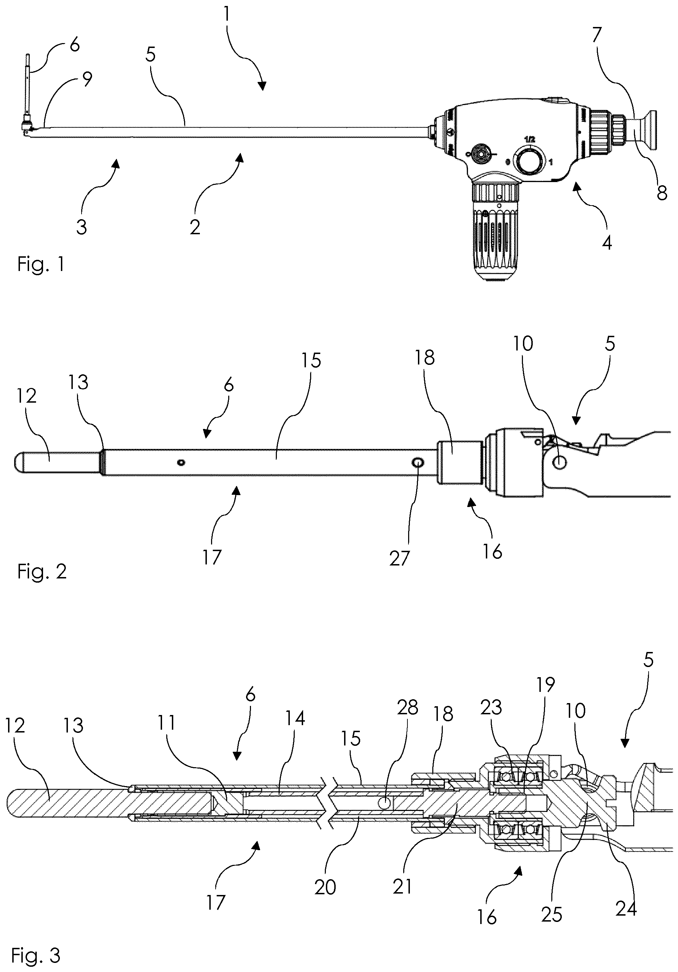

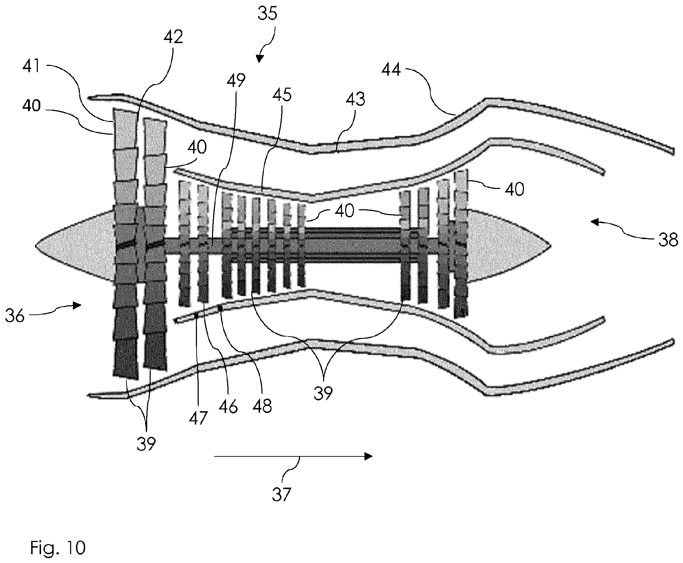

Figur 1 zeigt ein erstes Ausführungsbeispiel eines Systems 1 zur In-Situ-Oberflächenbearbeitung einer Triebwerksschaufel. Das System 1 umfasst ein Bearbeitungsinstrument 2 mit einem abwinkelbaren rohrförmigen Schaft 3 und einer manuell zu haltenden Handhabungseinrichtung 4. Das endoskopische Bearbeitungsinstrument 2 kann in einer nicht-abgewinkelten Ausgangskonfiguration durch eine laterale Zugangsöffnung in ein Flugzeugtriebwerk eingeschoben werden, wie bezugnehmend auf Figur 10 nachfolgend noch näher erläutert wird. In einer Arbeitskonfiguration, die in Figur 1 dargestellt ist, ist der rohrförmige Schaft 3 abgewinkelt. Um den Schaft 3 abwinkeln zu können, ist dieser in einen proximalen ersten Schaftabschnitt 5 und einen distalen zweiten Schaftabschnitt 6 aufgeteilt. Um von der Ausgangskonfiguration in die Arbeitskonfiguration und zurück zu wechseln, wird der zweite Schaftabschnitt 6 relativ zum ersten Schaftabschnitt 5 verschwenkt bzw. abgewinkelt.

Das endoskopische Bearbeitungsinstrument 2 verfügt über ein Beobachtungsinstrument 7, dass in das Bearbeitungsinstrument 2 integriert ist. von dem Bearbeitungsinstrument 7, das dem Fachmann aus dem Stand der Technik hinlänglich bekannt ist, sind in Figur 1 lediglich ein Okular 8 und eine Austrittsöffnung 9 dargestellt, in der ein Spiegel angeordnet ist, der einem durch das Okular 8 blickenden Benutzer ermöglicht, in Richtung des zweiten Schaftabschnitts 6 zu blicken, wenn dieser abgewinkelt zum ersten Schaftabschnitt 5 angeordnet ist.

Die Figuren 2 und 3 zeigen einen Ausschnitt des in Figur 1 gezeigten Ausführungsbeispiels, der den zweiten Schaftabschnitt 6 sowie einen Teil des ersten Schaftabschnitts 5 umfasst. Dabei befindet sich der zweite Schaftabschnitt 6 im Hinblick auf den ersten Schaftabschnitt 5 in der nicht-abgewinkelten Ausgangskonfiguration. In Figur 3, die eine Schnittansicht der Darstellung aus Figur 2 zeigt, ist der zweite Schaftabschnitt 6 nur teilweise dargestellt, wie durch die doppelt gezackte Linie angegeben wird, um die wesentlichen Elemente des Bearbeitungsinstruments 2 deutlich erkennbar darstellen zu können.

Wie in den Figuren 2 und 3 zu erkennen ist, ist der zweite Schaftabschnitt 6 über ein Gelenk 10 verschwenkbar an dem ersten Schaftabschnitt 5 angeordnet. Beispielsweise kann der zweite Schaftabschnitt 6 zum Übergang von der in den Figuren 2 und 3 gezeigten Ausgangskonfigurationen in die in den Figuren 1, 4 und 5 gezeigten Arbeitskonfigurationen um 90° +/- 10° relativ zu dem ersten Schaftabschnitt 5 verschwenkt werden.

Wie insbesondere in Figur 3 deutlich zu erkennen ist, verfügt der zweite Schaftabschnitt 6 über eine Werkzeugaufnahme 11, in die verschiedene Werkzeugköpfe 12 eingesetzt werden können. Bei den Werkzeugköpfen 12 kann es sich beispielsweise um Fräs-, Schleif- oder Polieraufsätze handeln, die am distalen oder freien Ende 13 des zweiten Schaftabschnitts 6 aus diesen herausragen. Mit dem Werkzeugkopf 2 kann die Oberfläche einer Triebwerksschaufel bearbeitet werden.

Innerhalb des zweiten Schaftabschnitts 6 ist weiterhin eine Welle 14 angeordnet, mit der die Werkzeugaufnahme 11 und damit ein darin eingesetzter Werkzeugkopf 12 drehend angetrieben werden können. Hierzu ist die Welle 14 drehbar in dem zweiten Schaftabschnitt 6 gelagert.

Die Werkzeugaufnahme 11 und die Antriebswelle 14 sind von einer Hülse 15 umgeben, die auch als Hülle oder Rohr bezeichnet werden könnte. Die Hülse 15 dreht sich nicht mit, wenn die Antriebswelle 14 drehend angetrieben ist und verhindert so, dass durch die sich drehende Antriebswelle 14 und die sich ebenfalls mitdrehende Werkzeugaufnahmen Bestandteile der Triebwerksschaufel beschädigt werden, die nicht zur Bearbeitung vorgesehen sind. Umgekehrt schützt die Hülse 15 auch die Antriebswelle 14 und die Werkzeugaufnahme 11 vor Beschädigungen.

Der zweite Schaftabschnitt 6 kann weiter in einen Kupplungsabschnitt 16 und einen Verlängerungsabschnitt 17 unterteilt werden. Der Kupplungsabschnitt 16 dient dabei zur lösbaren Verbindung des Verlängerungsabschnitts 17 mit dem Bearbeitungsinstrument 2. Durch die Verwendung des Kupplungsabschnitts 16 können Verlängerungsabschnitte 17 unterschiedlicher Längen bzw., wie nachfolgend noch näher dargestellt wird, mit oder ohne Knick im Verlängerungsabschnitt 17 verwendet werden. Dies ermöglicht die Bearbeitung von Triebwerksschaufeln mit unterschiedlicher Tiefe oder von Triebwerksschaufeln bei denen sich die Zugangsöffnung in unterschiedlichen Abständen zur Triebwerksschaufel befindet.

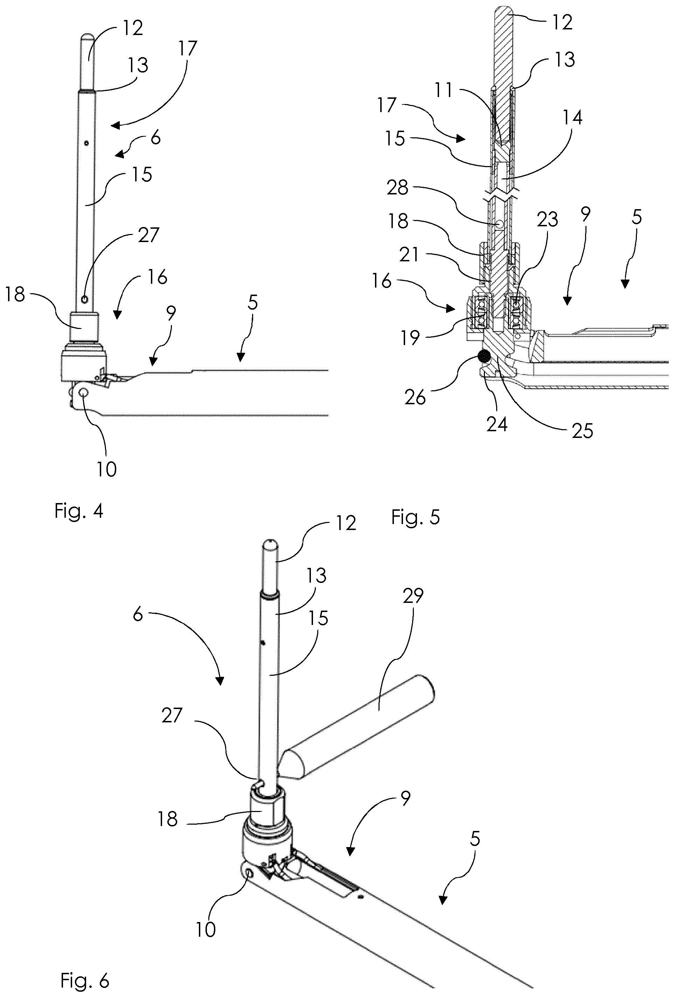

Der Kupplungsabschnitt 16 ist zweigeteilt und umfasst eine außenliegende Kupplung 18 und einen innenliegende Kupplung 19. Die innenliegende Kupplung 19 ist nur in den Schnittansichten in den Figuren 3 und 5 dargestellt.

Die außenliegende Kupplung 18 ist so ausgestaltet, dass sie drehfest mit der Hülse 15 verbunden werden kann. Hierzu ist an einer Innenwandung der außenliegenden Kupplung 18 ein Gewinde ausgebildet, in das ein entsprechendes Gegengewinde an der Hülse 15 eingreift. Die Gewinde sind in den Figuren 3 und 5 nicht ausdrücklich dargestellt. Da die Verbindung der außenliegenden Kupplung 18 und der Hülse 15 drehfest ist, kann die Hülse 15 im verbundenen Zustand nicht relativ zur außenliegenden Kupplung 18 verdreht werden, ohne die Hülse 15 von der außenliegenden Kupplung zumindest teilweise zu lösen.

Die innenliegende Kupplung 19 ist entsprechend ausgebildet und weist ebenfalls ein Gewinde auf, mit dem der im Verlängerungsabschnitt 17 geführte Teil der Antriebswelle 14, der auch als distaler Teil 20 der Antriebswelle 14 bezeichnet werden kann, mittels eines Kupplungselements 21 drehfest verbunden ist. Auch die drehfeste Verbindung zwischen dem distalen Teil 20 der Antriebswelle 14 und der innenliegende Kupplung 19 wird durch ein Gewinde vermittelt, dass an einer innenliegenden Oberfläche der innenliegenden Kupplung 19 ausgebildet ist. Am Kupplungselement 21 des distalen Teils 20 der Antriebswelle 14 ist ein entsprechendes Gegengewinde geformt. Auch diese Gewinde sind in den Figuren 3 und 5 nicht dargestellt.

Aufgrund der drehfesten Verbindung zwischen der innenliegenden Kupplung 19 und dem distalen Teil 20 der Antriebswelle 14 bildet die innenliegende Kupplung 19 ein Teil der Antriebswelle 14, der auch als proximaler Teil 22 der Antriebswelle 14 bezeichnet werden kann. Wenn die innenliegende Kupplung 19 durch einen entsprechenden Antrieb in Rotation versetzt wird, führt dies entsprechend zu einer Rotation des distalen Teils 20 der Antriebswelle 14, die über die Werkzeugaufnahme 11 auf einen Werkzeugkopf 12 übertragen wird. Die innenliegende Kupplung 19 ist entsprechend drehbar im zweiten Schaftabschnitt 6 angeordnet, wobei hierzu in dem in den Figuren 1 bis 5 dargestellten Ausführungsbeispiel ein Kugellager 23 vorgesehen ist.

Die innenliegende Kupplung 19 weist an ihrem proximalen Ende 24, das nur in den Figuren 3 und 5 zu erkennen ist und das gleichzeitig das proximale Ende der Antriebwelle 14 formt, als Riemenführungsrolle 25 ausgebildet. Über die Riemenführungsrolle 25 wird, wie in Figur 5 zu erkennen ist, in der abgewinkelten Arbeitskonfiguration ein Antriebsriemen 26 gespannt, mit dem die Antriebswelle 14 angetrieben bzw. in Rotation versetzt wird. der Antriebsriemen 26 wird innerhalb des ersten Schaftabschnitts 5 zur Handhabungseinrichtung 4 geführt, in der ein nicht dargestellter Elektromotor angeordnet ist, der den Antriebsriemen 26 antreibt. Der in der Handhabungseinrichtung 4 angeordnete Elektromotor kann auch als Antriebseinheit bezeichnet werden.

Wie aus dem Vergleich der Figuren 3 und 5 deutlich zu erkennen ist, ist die Riemenführungsrolle 25 so ausgebildet, dass beim Verkippen des zweiten Schaftabschnitts 6 aus der Ausgangskonfiguration in Figur 3 in die Arbeitskonfiguration in Figur 5 der Antriebsriemen 26 um die Riemenführungsrolle 25 gespannt wird. Damit wird auf vorteilhafte Weise sichergestellt, dass in der Ausgangskonfiguration keine Kraftübertragung zwischen dem Antriebsriemen 26 und der Antriebswelle 14 und damit dem Werkzeugkopf 12 möglich ist. So kann eine unbeabsichtigte Aktivierung des Motors in der Handhabungseinrichtung 4, bevor das endoskopische Bearbeitungsinstrument 2 in der Arbeitskonfiguration ist, nicht dazu führen, dass der Werkzeugkopf 12 in Rotation versetzt wird und damit zu Schäden führen kann.

Um den Verlängerungsabschnitt 17 des zweiten Schaftabschnitts 6 mit dem Kupplungsabschnitt 16 zu verbinden, das heißt, um das am distalen Teil 20 der Antriebswelle 14 ausgebildete Gewinde mit dem an der innenliegenden Kupplung 19 ausgebildete Gewinde zu verschrauben und auch die Hülse 15 mit der außenliegenden Kupplung 18 zu verschrauben, ist in dem in den Figuren 1 bis 6 dargestellten Ausführungsbeispiel sowohl in der Hülse 15 als auch im distalen Teil 20 der Antriebswelle 14 jeweils eine Durchgangsbohrung 27, 28 ausgebildet. Durch die Durchgangsbohrungen 27, 28 wird ein stiftförmiges Werkzeug 29 eingeführt, wie in Figur 6 gezeigt.

Das stiftförmige Werkzeug 29 wird dazu verwendet, die Ausrichtung bzw. relative Orientierung oder relative Drehung des distalen Teils 20 der Antriebswelle 14 und der Hülse 15 relativ zueinander festzulegen, so dass der Verlängerungsabschnitt 17 über die beiden Kupplungen 18, 19 mit dem Kupplungsabschnitt 16 verbunden werden kann. Auch zum Lösen der Verbindung zwischen dem Verlängerungsabschnitt 17 und dem Kupplungsabschnitt 16 wird das stiftförmige Werkzeug 29 wieder durch die beiden Durchgangsbohrungen 27, 28 geführt. Das Werkzeug 29 selber kann dann auch als Hebel verwendet werden, mit dem die entsprechenden Schraubbewegungen durchgeführt werden. Zum Betrieb des endoskopischen Bearbeitungsinstruments 2 wird das stiftförmige Werkzeug 29 aus den Durchgangsbohrungen 27, 28 entfernt.

Wie zudem in Figur 6 zu erkennen ist, wird in dem vorliegenden Ausführungsbeispiel ein Wechsel des Verlängerungsabschnitts 17, d.h., sowohl die Verbindung eines Verlängerungsabschnitts 27 mit dem Kupplungsabschnitt 16 als auch das Lösen des Verlängerungsabschnitts 17 von diesem durchgeführt, wenn sich das Bearbeitungsinstrument 2 in der Arbeitskonfiguration befindet, das heißt, wenn der zweite Schaftabschnitt 6 abgewinkelt zum ersten Schaftabschnitt 5 ist. Denn in der Arbeitsstellung wird der die Antriebswelle 14 antreibende Antriebsriemen 26 um die Riemenführungsrolle 25 die am proximalen Ende 24 der Antriebswelle 14 ausgebildet ist, gespannt und verhindert so, dass die innenliegende Kupplung 19 beim Einschrauben des Verlängerungsabschnitts 17 mitdrehen kann. So kann auf einfache Weise eine Verbindung zwischen dem Verlängerungsabschnitt 17 und dem Kupplungsabschnitt 16 hergestellt werden.

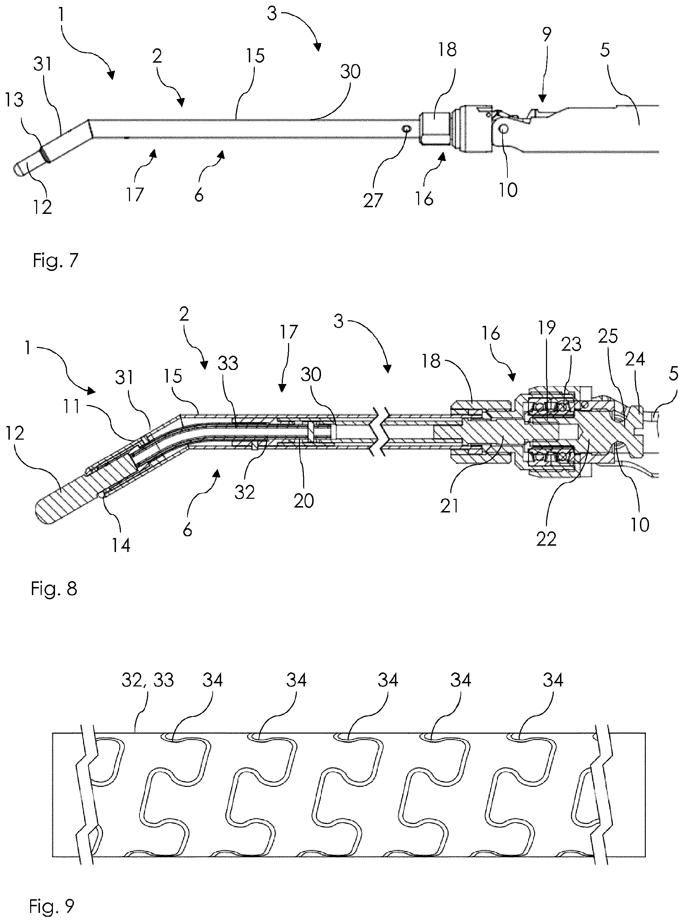

Bezugnehmend auf die Figuren 7 und 8 wird nachfolgend ein zweites Ausführungsbeispiel eines Systems 1 zur In-Situ-Oberflächenbearbeitung beschrieben. Dieses System 1 bzw. das darin verwendete Bearbeitungsinstrument 2 stimmen weitgehend mit dem bereits bezugnehmend auf die Figuren 1 bis 6 beschriebenen Ausführungsbeispiel überein. Nachfolgend werden daher lediglich Unterschiede beschrieben, in denen das zweite Ausführungsbeispiel von dem ersten Ausführungsbeispiel abweichen. Dabei werden gleichlautende bzw. die gleichen Elemente wie im ersten Ausführungsbeispiel mit dem gleichen Bezugszeichen gekennzeichnet.

Das zweite Ausführungsbeispiel unterscheidet sich von dem ersten Ausführungsbeispiel in der Ausgestaltung des Verlängerungsabschnitts 17 des zweiten Schaftabschnitts 6, der nicht gerade ist, sondern einen Knick aufweist, mit dem andernfalls schwierig zu erreichende Oberflächen einer Triebwerksschaufel bearbeitet werden können.

In der Ausführungsform ist der zweite Schaftabschnitt 6, das heißt, insbesondere der Verlängerungsabschnitt 17, in einen proximalen ersten Unterabschnitt 30 und einen distalen zweiten Unterabschnitt 31 aufgeteilt. Der zweite Unterabschnitt 31 verläuft gegenüber dem ersten Unterabschnitt 30 unter einem festen Winkel, von beispielsweise 15°. Damit ist auch die Werkzeugaufnahme 11 und ein darin eingesetzter Werkzeugkopf 12 gegenüber der Erstreckungsrichtung des ersten Unterabschnitts 30 geneigt. Der Winkel, unter dem der zweite Unterabschnitt 31 zu dem ersten Unterabschnitt 30 geneigt ist, ist dem Winkel entgegengesetzt, unter dem der erste Unterabschnitt 30 zu dem ersten Schaftabschnitt 5 geneigt ist, wenn sich die Handhabungseinrichtung 4 in der Arbeitskonfiguration befindet. Beispielsweise kann in der Arbeitskonfiguration der erste Unterabschnitt 30 gegenüber dem ersten Schaftabschnitt 5 um 90° geneigt sein, während der zweite Unterabschnitt 31 gegenüber dem ersten Schaftabschnitt 5 um 75° geneigt ist.

Um die Werkzeugaufnahme 11 und einen darin eingesetzten Werkzeugkopf 12 dennoch antreiben zu können, ist die Antriebswelle 14 und insbesondere der sich in dem Ausführungsbeispiel durch den Verlängerungsabschnitt 17 erstreckende distale Teil 20 der Antriebswelle 14 biegbar ausgestaltet. Dies ist notwendig, damit sich die rotierende Antriebswelle 14 über den Knick erstrecken kann, der zwischen dem ersten und dem zweiten Unterabschnitt 30, 31 ausgebildet ist.

In dem Ausführungsbeispiel in den Figuren 7 und 8 wird der distale Teil 20 der Antriebswelle 14 von zwei rohrförmigen Übertragungselementen 32, 33 gebildet, die ineinandergesteckt sind und in einem überlappenden Abschnitt geschlitzt ausgestaltet sind. In dem in den Figuren 7 und 8 gezeigten Ausführungsbeispiel entspricht der Abschnitt, in dem die rohrförmigen Übertragungselemente 32, 33 überlappend geschlitzt sind, der gesamten Länge der Übertragungselemente 32, 33.

Das genaue Schlitzmuster ist in Figur 8 nicht zu erkennen, allerdings in Figur 9 gezeigt, die eine Draufsicht auf eines der rohrförmigen Übertragungselemente 32, 33 darstellt. In Figur 9 ist deutlich zu erkennen, dass die Schlitze 34 um die Übertragungselemente 32, 33 mehrfach spiralförmig herumlaufen. Die Schlitze 34 folgen jedoch keiner graden Linie, sondern sind mäandernd gebildet. Diese Form der Schlitze, die beispielsweise als Laserschlitz hergestellt werden kann, hat sich als besonders vorteilhaft erwiesen, da mit ihr eine verlustarme Übertragung des Drehmoments möglich ist.

In den Figuren 7 und 8 ist der erste Schaftabschnitt 5 nur teilweise dargestellt. Das endoskopische Bearbeitungsinstrument 2 ist nicht näher dargestellt. Es wird insoweit auf die in den vorhergehenden Figuren enthaltenen Darstellungen verwiesen, die insoweit eine zu dem zweiten Ausführungsbeispiel identische Ausgestaltung zeigen.

Figur 10 zeigt schließlich ein Beispiel eines Flugzeugtriebwerks 35 in Form eines Mantelstromtriebwerks. Bei der Darstellung in Figur 10 handelt es sich um eine Schnittansicht durch das Triebwerk 35.

Das Triebwerk 35 umfasst eine Fluideintrittsseite 36, durch die im Betrieb Luft in das Triebwerk entlang einer Fluidhauptströmungsrichtung 37 einströmt und durch das Triebwerk hindurch zu einer Fluidaustrittsseite 38 durchströmt. Das in Figur 10 gezeigte Triebwerk 35 verfügt über eine Vielzahl von Verdichter- und Turbinenstufen 39, von denen in Figur 10 nur einige wenige der Übersichtlichkeit halber mit Bezugszeichen versehen sind. Jede der Verdichter- und Turbinenstufen 39 ist aus einer Vielzahl von Triebwerksschaufeln bzw. Laufschaufeln 40 gebildet, von denen ebenfalls wieder nur einige wenige exemplarisch mit Bezugszeichen versehen sind. Jede der Triebwerksschaufeln verfügt über eine Eintrittskante 41 und eine Austrittskante 42, wobei nur für eine Triebwerksschaufel 40 in Figur 10 die Eintrittskante 41 und die Austrittskante 42 exemplarisch mit Bezugszeichen versehen sind. Als Eintrittskante 41 wird dabei die Anströmkante der Triebwerksschaufel 40 bezeichnet, die der Fluideintrittsseite 36 des Triebwerks 35 zugewandt ist. Entsprechend wird als Austrittskante 42 die Anströmkante der Triebwerksschaufel 40 bezeichnet, die der Fluidaustrittsseite 38 zugewandt ist.

Figur 10 zeigt weiterhin die Triebwerksgondel 43, die ein Gehäuse 44 des Triebwerks bildet. Ein Teil der Triebwerksschaufeln 40 ist zudem in einem zusätzlichen Verdichtergehäuse 45 angeordnet. Um beispielsweise an der mit dem Bezugszeichen 46 bezeichneten Triebwerksschaufel 46 Oberflächenbearbeitungen vornehmen zu können, ist in dem Verdichtergehäuse 45 eine in Strömungsrichtung 37 vor der Triebwerksschaufel 46 angeordnete Zugangsöffnung 47 ausgebildet, durch die ein bekanntes endoskopisches Bearbeitungsinstrument eingeschoben werden kann.

Aufgrund der komplexen Geometrie der Triebwerksschaufeln 46 ist es aber notwendig, diese auch von ihrer Rückseite aus bearbeiten zu können. Hierzu wird eine Zugangsöffnung 48 verwendet, die stromabwärts von der Triebwerksschaufel 46 ausgebildet und eigentlich zur Bearbeitung der Triebwerksschaufeln 40, 46 der nachfolgenden Verdichter- oder Turbinenstufe 39 vorgesehen ist. Durch diese Zugangsöffnung 48 kann ein Bearbeitungsinstrument 2 gemäß den zuvor beschriebenen Ausführungsbeispielen in das Triebwerk 35 radial auf die zentrale Achse 49 zu eingebracht werden. Aufgrund des lang ausgedehnten zweiten Schaftabschnitts 6 kann mit diesem Bearbeitungsinstrumenten 2 die Triebwerksschaufel 46 und auch die weiteren Triebwerksschaufeln von der in Hauptströmungsrichtung 37 rückwertigen Seite aus bearbeitet werden. Dies ermöglicht eine vollständige und gründliche Reparatur der Anströmkanten 41, 42 der Triebwerksschaufeln 40, 46.

Das in Figur 10 dargestellte Flugzeugtriebwerk 35 verfügt über weitere Zugangsöffnungen 47, 48 die jedoch in der Zeichnung nicht dargestellt sind, um diese nicht zu überfrachten. Auch eventuell vorhandene Zugangsöffnungen durch die Triebwerksgondel 43 bzw. das äußere Gehäuse des Triebwerks 35 sind nicht dargestellt, da dieses gegeben falls auch aufgeklappt werden kann, um das Verdichtergehäuse 45 zu erreichen.

### Bezugszeichenliste

- 1: System
- 2: endoskopisches Bearbeitungsinstrument
- 3: Schaft
- 4: Handhabungseinrichtung
- 5: proximaler erster Schaftabschnitt
- 6: distaler zweiter Schaftabschnitt
- 7: Beobachtungsinstrument
- 8: Okular
- 9: Austrittsöffnung mit Spiegel
- 10: Gelenk
- 11: Werkzeugaufnahme
- 12: Werkzeugkopf
- 13: distales oder freies Ende des zweite Schaftabschnitts
- 14: Antriebswelle
- 15: Hülse
- 16: Kupplungsabschnitt
- 17: Verlängerungsabschnitt
- 18: außenliegende Kupplung
- 19: innenliegende Kupplung
- 20: distaler Teil der Antriebswelle
- 21: Kupplungselement
- 22: proximaler Teil der Antriebswelle
- 23: Kugellager
- 24: proximales Ende der innenliegenden Kupplung/Antriebswelle
- 25: Riemenführungsrolle
- 26: Antriebsriemen
- 27: Durchgangsbohrung in der Hülse
- 28: Durchgangsbohrung im distalen Teil der Antriebswelle
- 29: stiftförmiges Werkzeug
- 30: proximaler erster Unterabschnitt
- 31: distaler zweiter Unterabschnitt
- 32: rohrförmiges Übertragungselement
- 33: rohrförmiges Übertragungselement
- 34: Schlitze
- 35: Flugzeugtriebwerk
- 36: Fluideintrittsseite
- 37: Fluidhauptströmungsrichtung
- 38: Fluidaustrittsseite
- 39: Verdichter- bzw. Turbinenstufen
- 40: Triebwerksschaufel
- 41: Eintrittskante
- 42: Austrittskante
- 43: Triebwerksgondel
- 44: Gehäuse
- 45: Verdichtergehäuse
- 46: Triebwerksschaufel
- 47: Zugangsöffnung, stromaufwärts
- 48: Zugangsöffnung, stromabwärts
- 49: zentrale Achse

## Patentansprüche

1. System (1) zur In-situ-Oberflächenbearbeitung einer Triebwerksschaufel innerhalb eines sich entlang einer Fluidhauptströmungsrichtung (37) von einer Fluideintrittsseite (36) zu einer Fluidaustrittsseite (38) hin erstreckenden Flugzeugtriebwerks (35), wobei das System (1) ein endoskopisches Bearbeitungsinstrument (2) mit einem abwinkelbaren rohrförmigen Schaft (3) aufweist, wobei das Bearbeitungsinstrument (2) dazu eingerichtet ist, in einer nicht-abgewinkelten Ausgangskonfiguration im Wesentlichen radial durch mindestens eine laterale Zugangsöffnung (47, 48) in das Flugzeugtriebwerk (35) eingeschoben zu werden, wobei die laterale Zugangsöffnung (48) stromabwärts von der Triebwerksschaufel (46) angeordnet ist, und wobei das Bearbeitungsinstrument (2) an einem distalen Ende (13) des Schafts (3) eine drehbar angetriebene Werkzeugaufnahme (11) für einen Werkzeugkopf (12) zur Oberflächenbearbeitung aufweist und dazu eingerichtet ist, in einer abgewinkelten Arbeitskonfiguration einen in die Werkzeugaufnahme (11) eingesetzten Werkzeugkopf (12) an eine Anströmkante (41, 42) der Triebwerksschaufel (40, 46) anzusetzen,
wobei der Schaft (3) des Bearbeitungsinstruments (2) einen proximalen ersten Schaftabschnitt (5) und einen distalen zweiten Schaftabschnitt (6) aufweist, der von der Ausgangskonfiguration in die Arbeitskonfiguration gegenüber dem ersten Schaftabschnitt (5) abwinkelbar ist, wobei sich ein in die Werkzeugaufnahme (11) eingesetzter Werkzeugkopf (12) aus einem freien distalen Ende (13) des zweiten Schaftabschnitts (6) erstreckt und innerhalb des zweiten Schaftabschnitts (6) eine Antriebswelle 814) für die Werkzeugaufnahme (11) drehbar gelagert ist, mit der ein in die Werkzeugaufnahme (11) eingesetzter Werkzeugkopf (12) angetrieben werden kann,
**dadurch gekennzeichnet, dass** der zweite Schaftabschnitt (6) einen proximalen ersten Unterabschnitt (30) und einen distalen zweiten Unterabschnitt (31) aufweist, wobei der zweite Unterabschnitt (31) in einem festen Winkel gegenüber dem ersten Unterabschnitt (30) verläuft.

2. System (1) nach Anspruch 1, wobei ein Beobachtungsinstrument (7) in das Bearbeitungsinstrument (2) integriert ist.

3. System (1) nach Anspruch 1 oder 2, wobei der zweite Schaftabschnitt (6) eine Länge aufweist, die mindestens fünfmal so groß ist wie ein Außendurchmesser des ersten Schaftabschnitts (5).

4. System (1) nach einem der vorhergehenden Ansprüche, wobei die Antriebswelle (14) durch einen entlang des ersten Schaftabschnitts (5) verlaufenden Antriebsriemen (26) antreibbar ist, der in der Arbeitskonfiguration um ein als Riemenführungsrolle (25) dienendes proximales Ende (24) der Antriebswelle (14) verläuft, wobei der Antriebsriemen (26) vorzugsweise durch Abwinkeln des zweiten Schaftabschnitts (6) gegenüber dem ersten Schaftabschnitt (5) von der Ausgangskonfiguration in die Arbeitskonfiguration gespannt wird.

5. System (1) nach einem der vorhergehenden Ansprüche, wobei der zweite Schaftabschnitt (6) zumindest einen Kupplungsabschnitt (16) und einen Verlängerungsabschnitt (17) aufweist, wobei sich der Kupplungsabschnitt (16) an den ersten Schaftabschnitt (5) anschließt und der Verlängerungsabschnitt (17) lösbar mit dem Kupplungsabschnitt (16) verbunden ist, wobei der Verlängerungsabschnitt (17) einen distalen Teil (20) der Antriebswelle (14) sowie eine den distalen Teil (20) der Antriebswelle (14) umgebende Hülse (15) umfasst, wobei der Kupplungsabschnitt (16) vorzugsweise eine außenliegende Kupplung (18) zur drehfesten Verbindung des Kupplungsabschnitts (16) mit der Hülse (15) und eine innenliegende Kupplung (19) zur drehfesten Verbindung des Kupplungsabschnitts (16) mit dem distalen Teil (20) der Antriebswelle (14) aufweist, wobei die innenliegende Kupplung (19) relativ zur außenliegenden Kupplung (18) verdreht werden kann, um den distalen Teil (20) der Antriebswelle (14) anzutreiben, und wobei die Verbindung zwischen der außenliegenden Kupplung (18) und der Hülse (15) sowie der innenliegenden Kupplung (19) und dem distalen Teil (20) der Antriebswelle (14) lösbar ist.

6. System (1) nach Anspruch 4 und 5, wobei die innenliegende Kupplung (19) das proximale Ende (24) der Antriebswelle (14) bildet.

7. System (1) nach Anspruch 5 oder 6, wobei das System (1) so konfiguriert ist, dass zum Herstellen der Verbindung zwischen dem Verlängerungsabschnitt (17) und dem Kupplungsabschnitt (18) und zum Lösen derselben eine relative Orientierung zwischen Hülse (15) und distalem Teil (20) der Antriebswelle (14) temporär festgelegt wird, wobei zum Festlegen der relativen Orientierung von Hülse (15) und distalem Teil (20) der Antriebswelle (14) diese vorzugsweise jeweils eine Durchgangsbohrung (27, 28) aufweisen, die mittels eines stiftförmigen Werkzeugs (29) relativ zueinander ausgerichtet werden können.

8. System (1) nach einem der vorhergehenden Ansprüche, , wobei der zweite Unterabschnitt (31) gegenüber dem ersten Unterabschnitt (30) entgegengesetzt abgewinkelt zu der Richtung verläuft, in welcher der zweite Schaftabschnitt (6) gegenüber dem ersten Schaftabschnitt (5) abwinkelbar ist.

9. System (1) nach einem der vorhergehenden Ansprüche, wobei sich die Antriebswelle (14) biegbar und/oder gelenkig vom ersten Unterabschnitt (30) in den zweiten Unterabschnitt (31) erstreckt, wobei die Antriebswelle (14) vorzugsweise mindestens ein rohrförmiges Übertragungselement (32, 33) aufweist, wobei das mindestens eine rohrförmige Übertragungselement (32, 33) zumindest in einem Abschnitt geschlitzt ausgestaltet ist.

10. System (1) nach Anspruch 9, wobei die Antriebswelle (14) mindestens zwei ineinandergesteckte rohrförmige Übertragungselemente (32, 33) aufweist, wobei jedes der Übertragungselemente (32, 33) zumindest in einem überlappenden Abschnitt geschlitzt ausgestaltet ist, wobei das mindestens eine rohrförmige Übertragungselement (32, 33) vorzugsweise in dem zumindest einen Abschnitt mittels eines mäandernd spiralförmig mehrfach umlaufenden Laserschnitts geschlitzt ist.

11. System (1) nach einem der vorhergehenden Ansprüche, wobei das Bearbeitungsinstrument (2) eine von einer Bedienperson manuell zu haltende Handhabungseinrichtung (4) aufweist, wobei eine Antriebseinheit in der Handhabungseinrichtung (4) integriert oder daran anschließbar ist, wobei der Schaft (3) lösbar mit der Handhabungseinrichtung (4) gekoppelt oder unlösbar mit der Handhabungseinrichtung (4) verbunden ist.

12. System (1) nach einem der vorhergehenden Ansprüche, ferner mit einem Set an unterschiedlichen Werkzeugköpfen (12), die wahlweise mit der Werkzeugaufnahme (11) auswechselbar koppelbar sind.

13. Verwendung eines Systems nach einem der vorhergehenden Ansprüche zur In-situ-Oberflächenbearbeitung einer Triebwerksschaufel innerhalb eines sich entlang einer Fluidhauptströmungsrichtung (37) von einer Fluideintrittsseite (36) zu einer Fluidaustrittsseite (38) hin erstreckenden Flugzeugtriebwerks (35), wobei das Bearbeitungsinstrument (2) in der nicht-abgewinkelten Ausgangskonfiguration im Wesentlichen radial durch mindestens eine laterale Zugangsöffnung (47, 48) in das Flugzeugtriebwerk (35) eingeschoben wird, wobei die laterale Zugangsöffnung (48) stromabwärts von der Triebwerksschaufel (46) angeordnet ist, und nachfolgend in der abgewinkelten Arbeitskonfiguration des Bearbeitungsinstruments (2) ein in die Werkzeugaufnahme (11) eingesetzter Werkzeugkopf (12) an eine Anströmkante (41, 42) der Triebwerksschaufel (40, 46) angesetzt wird.

14. Verwendung nach Anspruch13, wobei der zweiten Schaftabschnitt (6) bei einem Übergang von der Ausgangskonfiguration in die Arbeitskonfiguration gegenüber dem ersten Schaftabschnitt (5) abgewinkelt wird.

## Claims

1. A system (1) for in-situ surface processing of an engine blade within an aircraft engine (35) extending along a main fluid flow direction (37) from a fluid inlet side (36) to a fluid outlet side (38), the system (1) comprising an endoscopic processing instrument (2) having a tubular shaft (3) that can be angled, the processing instrument (2) being configured to be inserted in a non-angled initial configuration substantially radially through at least one lateral access opening (47, 48) into the aircraft engine (35), the lateral access opening (48) being located downstream of the engine blade (46), and the processing instrument (2) having, at a distal end (13) of the shaft (3), a rotatably driven tool holder (11) for a tool head (12) for surface processing and being configured, in an angled working configuration, to place a tool head (12), inserted into the tool holder (11), against a leading edge (41, 42) of the engine blade (40, 46),
wherein the shaft (3) of the processing instrument (2) having a proximal first shaft portion (5) and a distal second shaft portion (6), which can be angled from the initial configuration into the working configuration with respect to the first shaft portion (5), a tool head (12) inserted into the tool holder (11) extending from a free distal end (13) of the second shaft portion (6) and a drive shaft (14) for the tool holder (11) being rotatably mounted within the second shaft portion (6), by means of which drive shaft a tool head (12) inserted into the tool holder (11) can be driven,
**characterised in that** the second shaft portion (6) has a proximal first sub-portion (30) and a distal second sub-portion (31), the second sub-portion (31) running at a fixed angle to the first sub-portion (30).

2. The system (1) according to claim 1, wherein an observation instrument (7) is integrated into the processing instrument (2).

3. The system (1) according to claim 1 or 2, wherein the second shaft portion (6) has a length that is at least five times as great as an outer diameter of the first shaft portion (5).

4. The system (1) according to any one of the preceding claims, wherein the drive shaft (14) is drivable by a drive belt (26), which runs along the first shaft portion (5) and which, in the driving configuration, runs around a proximal end (24) of the drive shaft (14) serving as a belt guide roll (25), wherein the drive belt (26) preferably being tensioned by angling the second shaft portion (6) from the initial configuration into the working configuration with respect to the first shaft portion (5).

5. The system (1) according to any one of the preceding claims, wherein the second shaft portion (6) has at least one coupling portion (16) and one extension portion (17), wherein the coupling portion (16) adjoining the first shaft portion (5), and the extension portion (17) being releasably connected to the coupling portion (16), wherein the extension portion (17) comprising a distal part (20) of the drive shaft (14), together with a sleeve (15) surrounding the distal part (20) of the drive shaft (14), wherein the coupling portion (16) preferably having an external coupling (18) for connecting the coupling portion (16) to the sleeve (15) for conjoint rotation and an inner coupling (19) for connecting the coupling portion (16) to the distal part (20) of the drive shaft (14) for conjoint rotation, wherein the inner coupling (19) being able to be rotated relative to the outer coupling (18) in order to drive the distal part (20) of the drive shaft (14), and wherein the connection between the outer coupling (18) and the sleeve (15) as well as the connection between the inner coupling (19) and the distal part (20) of the drive shaft (14) being releasable.

6. The system (1) according to claim 4 and 5, wherein the inner coupling (19) forms the proximal end (24) of the drive shaft (14).

7. The system (1) according to claim 5 or 6, wherein the system (1) is configured temporarily to fix a relative orientation between the sleeve (15) and the distal part (20) of the drive shaft (14) for the purpose of establishing the connection between the extension portion (17) and the coupling portion (18), and for purposes of releasing said connection, the sleeve (15) and distal part (20) of the drive shaft (14) each preferably having a through-hole (27, 28) to fix the relative orientation between them, said through-holes being able to be aligned relative to one another by means of a pin-shaped tool (29).

8. The system (1) according to any one of the preceding claims, wherein the second sub-portion (31) runs at an angle opposite to the first sub-portion (30) with respect to the direction in which the second shaft portion (6) can be angled with respect to the first shaft portion (5).

9. The system (1) according to any one of the preceding claims, wherein the drive shaft (14) extends flexibly and/or in an articulated manner from the first sub-portion (30) into the second sub-portion (31), the drive shaft (14) preferably comprising at least one tubular transmission element (32, 33), wherein the at least one tubular transmission element (32, 33) being slitted in at least one portion.

10. The system (1) according to claim 9, wherein the drive shaft (14) comprises at least two tubular transmission elements (32, 33) which are inserted into one another, wherein each of the transmission elements (32, 33) being slitted in at least one overlapping portion, wherein the at least one tubular transmission element (32, 33) being slitted preferably in the at least one portion by means of a meandering multiple spiral-shaped peripheral laser cut.

11. The system (1) according to any one of the preceding claims, wherein the processing instrument (2) has a manipulation device (4) to be held manually by an operator, wherein a drive unit being integrated in the manipulation device (4) or being connectable thereto, the shaft (3) being releasably coupled to the manipulation device (4) or being non-releasably connected to the manipulation device (4).

12. The system (1) according to any one of the preceding claims, further comprising a set of different tool heads (12) that can be replaceably coupled with the tool holder (11) as required.

13. Use of a system according to any one of the preceding claims for in-situ surface processing of an engine blade within an aircraft engine (35) extending along a main fluid flow direction (37) from a fluid inlet side (36) to a fluid outlet side (38), wherein the processing instrument (2) being inserted in the non-angled initial configuration substantially radially through at least one lateral access opening (47, 48) into the aircraft engine (35), wherein the lateral access opening (48) being located downstream of the engine blade (46), and a tool head (12), inserted into the tool holder (11), then being placed against a leading edge (41, 42) of the engine blade (40, 46) in the angled working configuration of the processing instrument (2).

14. The use according to claim 13, wherein the second shaft portion (6) is angled with respect to the first shaft portion (5) when transitioning from the initial configuration into the working configuration.

## Revendications

1. Système (1) d'usinage de surface in situ d'une aube de moteur d'avion à l'intérieur d'un moteur d'avion (35) s'étendant le long d'une direction d'écoulement de fluide principale (37) d'un côté d'entrée de fluide (36) à un côté de sortie de fluide (38), dans lequel le système (1) comprend un instrument d'usinage endoscopique (2) doté d'une tige tubulaire coudée (3), dans lequel l'instrument d'usinage (2) est configuré pour être inséré dans une configuration initiale non coudée sensiblement radialement à travers au moins une ouverture d'accès latérale (47, 48) dans le moteur d'avion (35), dans lequel l'ouverture d'accès latérale (48) est disposée en aval de l'aube de moteur d'avion (46) et dans lequel l'instrument d'usinage (2) présente, à une extrémité distale (13) de la tige (3), un porte-outil entraîné en rotation (11) pour une tête d'outil (12) pour l'usinage de surface et est configuré pour appliquer, dans une configuration de travail coudée, une tête d'outil (12) insérée dans le porte-outil (11) sur un bord d'attaque (41, 42) de l'aube de moteur d'avion (40, 46),
dans lequel la tige (3) de l'instrument d'usinage (2) présente une première section de tige (5) et une deuxième section distale (6), qui sont inclinables de la configuration initiale à la configuration de travail par rapport à la première section de tige (5), dans lequel une tête d'outil (12) insérée dans le porte-outil (11) s'étend à partir d'une extrémité distale libre (13) de la deuxième section de tige (6) et un arbre d'entraînement (14) du porte-outil (11) est monté rotativement dans la deuxième section de tige (6), permettant l'entraînement d'une tête d'outil (12) insérée dans le porte-outil (11),
**caractérisé en ce que** la deuxième partie de tige (6) présente une première sous-section proximale (30) et une deuxième sous-section distale (31), dans lequel la deuxième sous-section (31) forme un angle fixe par rapport à la première sous-section (30).

2. Système (1) selon la revendication 1, dans lequel un instrument d'observation (7) est intégré à l'instrument d'usinage (2).

3. Système (1) selon la revendication 1 ou 2, dans lequel la deuxième section de tige (6) présente une longueur, qui est au moins cinq fois supérieure au diamètre extérieur de la première section de tige (5).

4. Système (1) selon une des revendications précédentes, dans lequel l'arbre d'entraînement (14) peut être entraîné par une courroie d'entraînement (26) s'étendant le long de la première section de tige (5) et qui, dans la configuration de travail, s'étend autour d'une extrémité proximale (24) de l'arbre d'entraînement (14) servant de galet de guidage de courroie (25), dans lequel la courroie d'entraînement (26) est de préférence tendue de la configuration initiale à la configuration de travail par l'inclinaison de la deuxième section de tige (6) par rapport à la première section de tige (5).

5. Système (1) selon une des revendications précédentes, dans lequel la deuxième section de tige (6) présente au moins une section d'accouplement (16) et une section d'extension (17), dans lequel la section d'accouplement (16) est adjacente à la première section de tige (5) et la section d'extension (17) est reliée de manière amovible à la section d'accouplement (16), dans lequel la section d'extension (17) comprend une partie distale (20) de l'arbre d'entraînement (14) et un manchon (15) entourant la partie distale (20) de l'arbre d'entraînement (14), dans lequel la section d'accouplement (16) présente de préférence un accouplement externe (18) pour la liaison solidaire en rotation de la section d'accouplement (16) au manchon (15) et un accouplement interne (19) pour la liaison solidaire en rotation de la section d'accouplement (16) à la partie distale (20) de l'arbre d'entraînement (14), dans lequel l'accouplement interne (19) peut être tourné par rapport à l'accouplement externe (18) pour entraîner la partie distale (20) de l'arbre d'entraînement (14), et dans lequel la liaison entre l'accouplement externe (18) et le manchon (15) ainsi que l'accouplement interne (19) et la partie distale (20) de l'arbre d'entraînement (14) est amovible.

6. Système (1) selon les revendications 4 et 5, dans lequel l'accouplement interne (19) forme l'extrémité proximale (24) de l'arbre d'entraînement (14).

7. Système (1) selon la revendication 5 ou 6, dans lequel le système (1) est configuré de telle sorte que, pour établir la liaison entre la section d'extension (17) et la section d'accouplement (18) et pour débloquer cette dernière, une orientation relative entre le manchon (15) et la partie distale (20) de l'arbre d'entraînement (14) est temporairement fixée, dans lequel pour fixer l'orientation relative du manchon (15) et de la partie distale (20) de l'arbre d'entraînement (14), ceux-ci présentent de préférence respectivement un alésage traversant (27, 28), qui peuvent être alignés l'un par rapport à l'autre au moyen d'un outil en forme de broche (29).

8. Système (1) selon une des revendications précédentes, dans lequel la deuxième sous-section (31) s'étend en inclinaison de direction opposée par rapport à la première sous-section (30), dans lequel la deuxième section de tige (6) peut être inclinée par rapport à la première section de tige (5).

9. Système (1) selon une des revendications précédentes, dans lequel l'arbre d'entraînement (14) s'étend de manière flexible et/ou articulée de la première sous-section (30) à la deuxième sous-section (31), dans lequel l'arbre d'entraînement (14) présente de préférence au moins un élément de transmission tubulaire (32, 33), dans lequel au moins un élément de transmission tubulaire (32, 33) a une configuration fendue dans au moins une section.

10. Système (1) selon la revendication 9, dans lequel l'arbre d'entraînement (14) présente au moins deux éléments de transmission tubulaires emboîtés (32, 33), dans lequel chacun des éléments de transmission (32, 33) a une configuration fendue au moins dans une section se chevauchant, dans lequel au moins un élément de transmission tubulaire (32, 33) est de préférence fendus dans ladite section au moyen d'une découpe laser multi-circonférentielle en spirale et sinueuse.

11. Système (1) selon une des revendications précédentes, dans lequel l'instrument de traitement (2) présente un dispositif de manipulation (4) destiné à être tenu manuellement par un opérateur, dans lequel une unité d'entraînement est intégrée au dispositif de manipulation (4) ou eut y être raccordée, dans lequel l'arbre (3) est couplé de manière amovible au dispositif de manipulation (4) ou raccordé de manière fixe au dispositif de manipulation (4).

12. Système (1) selon une des revendications précédentes, comprenant en outre un ensemble de têtes d'outil (12) différentes, qui peuvent être accouplées de manière sélective et interchangeable au porte-outil (11).

13. Utilisation d'un système selon une des revendications précédentes pour l'usinage de surface in situ d'une aube de moteur d'avion à l'intérieur d'un moteur d'avion (35) s'étendant le long d'une direction d'écoulement de fluide principale (37) d'un côté d'entrée de fluide (36) à un côté de sortie de fluide (38), dans lequel l'instrument d'usinage (2) est inséré dans la configuration initiale non coudée sensiblement radialement à travers au moins une ouverture d'accès latérale (47, 48) dans le moteur d'avion (35), dans lequel l'ouverture d'accès latérale (48) est disposée en aval de l'aube de moteur d'avion (46) et dans la configuration de travail coudée de l'instrument d'usinage (2), une tête d'outil (12) insérée dans le porte-outil (11) est appliquée sur un bord d'attaque (41, 42) de l'aube de moteur d'avion (40, 46),

14. Utilisation selon la revendication 13, dans laquelle la deuxième section de tige (6) est inclinée par rapport à la première section de tige (5) lors d'une transition de la configuration initiale à la configuration de travail.
